# EUROPEAN PATENT APPLICATION

(11) **EP 4 596 934 A1**
(43) Date of publication of application: **06.08.2025**
(21) Application number: 23871727.6
(22) Date of filing: 31.08.2023
(51) Int. Cl.: F16K 15/14, F04B 43/02, F04B 43/04, F04B 39/10

(54) **VALVE COMPONENT MEMBER**

(30) Priority: 30.09.2022 JP 2022158384
(71) Applicant: Daiken Medical Co., Ltd., Izumi-shi Osaka 594-1157 (JP)
(72) Inventor: KIM, Eulhyun, Izumi-shi, Osaka 594-1157 (JP)
(74) Representative: TBK
(86) International application number: PCT/JP2023/031899
(87) International publication number: WO 2024/070487

(57) **Abstract**

A valve component includes: a first metal plate (31, 33) having a through hole (3A3, 3B3); and a second metal plate (32) including: a base (32a) having a passing hole (3A4, 3B4) in a region overlapping the through hole (3A3, 3B3); a valve body (3A5, 3B5) configured to close the passing hole (3A3, 3B3); and a pair of valve supports (3A6, 3B6) that support the valve body (3A5, 3B5) to the base (32a) in such a manner that the valve body (3A5, 3B5) is located in the passing hole (3A4, 3B4). The second metal plate is joined to the first metal plate (31, 33) in such a manner that the valve body (3A5, 3B5) faces an edge portion defining the through hole (3A3, 3B3). Each of the valve supports (3A6, 3B6) has a base-side end (3A7, 3B7), an intermediate part (3A3, 3B8), and a valve body-side end (3A9, 3B9). Each of the ends has a center line (C1, C2) with respect to width directions and a width which is smaller than a width of each of the valve body (3A5, 3B5) and the base (32a), the center line agreeing with a reference center line (S) passing through the center (O) of the valve body (3A5, 3B5). The intermediate part (3A8, 3B8) extends away from the reference center line (S) in directions perpendicularly intersecting the reference center line (S). The first metal plate (31, 33) includes a through section (3A10) intersecting the reference center line (S) and penetrating through the intermediate part (3A8, 3B8) in plate thickness directions.

## Description

### Technical Field

The present invention relates to a valve component for a valve structure defined by a plurality of stacked metal plates.

### Background Art

For instance, a valve structure for a micropump disclosed in Patent Literature 1 has been known as a valve structure defined by a plurality of stacked metal plates.

The micropump disclosed in Patent Literature 1 includes: a central plate and a fixing plate each having a hole to allow a fluid to pass therethrough; a valve plate sandwiched between the central plate and the fixing plate, and having a valve mechanism between the hole of the central plate and the hole of the fixing plate. The valve structure in the micropump is defined by the central plate and the valve mechanism of the valve plate. The valve structure is configured to regulate flow of the liquid in a direction from the hole of the fixing plate to the hole of the central plate and permit the fluid to flow in an opposite direction thereto by causing a contacting part of the valve mechanism to come into contact with the central plate and close the hole of the central plate.

In preparation for the micropump, the valve plate is fixed to the central plate and the fixing plate under a high-temperature environment, and thereafter is returned to a state under a room-temperature environment.

The valve plate includes: a base having a passing hole to allow the fluid to pass therethrough; and the valve mechanism located in the passing hole. The valve mechanism has the contacting part to close the hole of the central plate, and two supports each connected to the base to support the contacting part in the passing hole.

The micropump described in Patent Literature 1 adopts such a valve plate as having a linear expansion coefficient which is larger than a linear expansion coefficient of each of the fixing plate and the central plate to generate an urging force for bringing the contacting part into contact with a periphery defining the hole of the central plate. Besides, the hole of the fixing plate has a size which is larger than the size of the hole of the central plate. This consequently makes the fixing plate have mechanical rigidity which is lower than the mechanical rigidity of the central plate.

Under the condition, in the preparation for the micropump, the valve plate is compressed more greatly than the fixing plate and the central plate depending on a difference between the linear expansion coefficients, and a compressive stress is generated in the change from the high-temperature environment to the room-temperature environment. Here, the valve plate deforms to make the contacting part approach the hole of the central plate in response to the compressive stress owing to the lower mechanical rigidity of the fixing plate than the mechanical rigidity of the central plate. It is seen from these perspectives that Patent Literature 1 describes generation of the urging force for bringing the contacting part into contact with the hole of the central plate.

In this regard, the contacting part may be disposed in contact with or be located closer to the central plate to keep the hole of the central plate closed under no application of a release force to the valve mechanism. When the valve mechanism is about to further expand in the state where the contacting part is in contact with the central plate under the high-temperature environment in the preparation for the micropump, the valve mechanism may shift away from the central plate. In this case, a gap may come into existence between the hole of the central plate and the valve mechanism under no application of the release force to the valve mechanism, resulting in causing unnecessary flow of the fluid.

### Citation List

### Patent Literature

Patent Literature 1: Japanese Unexamined Patent Publication No. 2005-83212

### Summary of Invention

The present invention has been accomplished in view of the disadvantages described above, and has an object of providing a valve component for a valve structure configured to prevent a gap from coming into existence between a hole (through hole) of a central plate and a valve mechanism (valve body) under no application of a release force to the valve mechanism (valve body).

### Means for solving the problem

A valve component according to a first feature of the invention is a valve component for a valve structure. The valve component includes: a first metal plate having a through hole; and a second metal plate including: a base having a passing hole in a region overlapping the through hole; a valve body configured to close the through hole by coming into contact with an edge portion defining the through hole; and a pair of valve supports that support the valve body to the base in such a manner that the valve body is located in the passing hole. The second metal plate is to be joined to the first metal plate in a positional relation preset in such a manner that the valve body faces the edge portion defining the through hole. Each of the valve supports has a base-side end extending from an edge portion defining the passing hole in the base toward the valve body, an intermediate part at a leading portion of the base-side end, and a valve body-side end extending from the intermediate part to the valve body. Each of the base-side end and the valve body-side end has a center line with respect to width directions and a width which is smaller than a width of each of the valve body and the base, the center line agreeing with a reference center line passing through the center of the valve body from a perpendicular viewpoint of the second metal plate viewed in plate perpendicularly intersecting directions that perpendicularly intersect a surface of the second metal plate, the reference center line extending along the surface of the second metal plate. The intermediate part extends farther away from the reference center line in extension directions perpendicularly intersecting the reference center line than the base-side end and the valve body-side end from the perpendicular viewpoint. The intermediate part is provided with a through section intersecting the reference center line from the perpendicular viewpoint and penetrating through the intermediate part in plate thickness directions.

The present invention provides a valve structure configured to prevent a gap from coming into existence between a through hole and a valve body under no application of a release force to the valve body.

The object, the features, and the advantages of the present invention will be further clarified by the following detailed description and the accompanying drawings.

### Brief Description of Drawings

Fig. 1 is a schematic vertical cross-sectional view of a micropump in a first embodiment.
Fig. 2 is a plan view of a valve structure in the first embodiment seen from a position in a +z-direction to a position in a -z-direction.
Fig. 3 is a perspective view taken along the line III-III in Fig. 2.
Fig. 4 is a plan view of a ninth plate seen from a position in the +z-direction to a position in the -z-direction.
Fig. 5 is a plan view of a tenth plate seen from a position in the +z-direction to a position in the -z-direction.
Fig. 6 is a plan view of an eleventh plate seen from a position in the +z-direction to a position in the -z-direction
Fig. 7 is an enlarged plan view of an inlet valve at the tenth plate.
Fig. 8 is a cross-sectional view taken along the line VIII-VIII in Fig. 4.
Fig. 9 is an enlarged perspective view of the inlet valve at the tenth plate.
Fig. 10 is an enlarged plan view of an inlet valve at a tenth plate in a second embodiment.
Fig. 11 is an enlarged plan view of an inlet valve at a tenth plate in a third embodiment.
Fig. 12 is an enlarged plan view of an inlet valve at a tenth plate in a fourth embodiment.

### Description of Embodiments

Hereinafter, a valve structure defined by a valve component in each embodiment of the present invention and a micropump having the valve structure will be described with reference to the accompanying drawings.

### First Embodiment

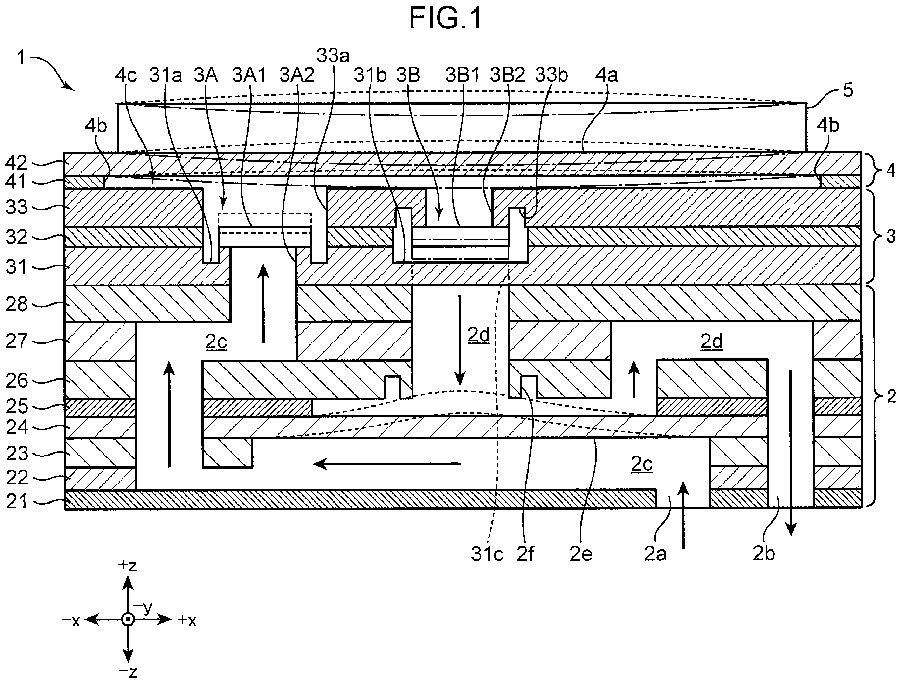

Fig. 1 is a schematic vertical cross-sectional view of a micropump in a first embodiment.

Hereinafter, first, a gist of an overall configuration and operations of the micropump in the embodiment will be described, and then, a valve structure will be described in detail.

In the embodiment, referring to Fig. 1, a right direction from an inlet valve structure 3A toward an outlet valve structure 3B in Fig. 1 is defined as a "+x-direction" and an opposite direction thereto is defined as a "-x-direction". The +x-direction and the -x-direction are collectively called "first directions x". Among the directions in which a first plate 21 to a thirteenth plate 42 illustrated in Fig. 1 extend, directions that perpendicularly intersect the first directions x are defined as "second directions y". A depth direction of the sheet plane of Fig. 1 is defined as a "+y-direction", and a forward direction of the sheet plane is defined as a "-y-direction". Directions perpendicularly intersecting a surface of each of the first plate 21 to the thirteenth plate 42 are defined as "third directions z". A direction from the first plate 21 to the thirteenth plate 42 is defined as the "+z-direction", and an opposite direction thereto is defined as the "-z-direction".

As illustrated in Fig. 1, a micropump 1 includes a flow passage part 2 having flow passages for a fluid, a valve structure 3 configured to regulate flow of a fluid in one direction in the flow passage part 2, a pumping part 4 that gives a fluid force to the fluid, and a piezoelectric element 5 that drives the pumping part 4.

The flow passage part 2 has an inlet 2a for introducing the fluid, an outlet 2b for discharging the fluid, an inflow passage 2c for guiding the fluid introduced through the inlet 2a to the valve structure 3, an outflow passage 2d for guiding the fluid having flowed out of the valve structure 3 to the outlet 2b, a flow passage part diaphragm 2e that separates the inflow passage 2c and the outflow passage 2d from each other, and a flow passage part valve seat 2f on a side of the outflow passage 2d with respect to the flow passage part diaphragm 2e. The flow passage part diaphragm 2e is elastically deformable, and deforms in the +z-direction as denoted by the dashed line in Fig. 1 and stops or suspends outflow of the fluid when the fluid flowing in the inflow passage 2c has a pressure which is higher than a pressure of the fluid flowing in the outflow passage 2d by a predetermined value or larger.

The valve structure 3 includes an inlet valve structure 3A connected to the inflow passage 2c and an outlet valve structure 3B connected to the outflow passage 2d. The inlet valve structure 3A has an inlet valve 3A1 and an inlet valve seat 3A2 to close the inflow passage 2c in cooperation with the inlet valve 3A1 therebetween. The outlet valve structure 3B has an outlet valve 3B1 and an outlet valve seat 3B2 to close the outflow passage 2d in cooperation with the outlet valve 3B1 therebetween. The inlet valve structure 3A and the outlet valve structure 3B will be described in detail later.

The pumping part 4 includes a pumping part diaphragm 4a facing the valve structure 3, a side wall 4b standing from a periphery of the pumping part diaphragm 4a toward the valve structure 3, and a pumping chamber 4c. The pumping chamber 4c includes a space defined among the pumping part diaphragm 4a, the side wall 4b, and the valve structure 3, is connected to the inflow passage 2c via the inlet valve structure 3A, and is connected to the outflow passage 2d via the outlet valve structure 3B. In response to activation of the piezoelectric element 5, the pumping part diaphragm 4a elastically deforms in the +z-direction as denoted by the dashed line or in the -z-direction as denoted by the dash-dotted line in Fig. 1, fluctuates a pressure in the pumping chamber 4c, and makes the fluid in each of the inflow passage 2c, the pumping chamber 4c, and the outflow passage 2d flow.

The inlet valve 3A1 closes the inflow passage 2c by coming into close contact with the inlet valve seat 3A2 when a pressure at an upstream position of the inlet valve 3A1 in the inflow passage 2c is equal to or lower than the pressure in the pumping chamber 4c. By contrast, the inlet valve 3A1 elastically deforms in the +z-direction as denoted by the dashed line in Fig. 1 and leaves the inlet valve seat 3A2 to open the inflow passage 2c when the pressure at the upstream position of the inlet valve 3A1 is higher than the pressure in the pumping chamber 4c.

The outlet valve 3B1 closes the outflow passage 2d by coming into close contact with the outlet valve seat 3B2 when the pressure in the pumping chamber 4c is equal to or lower than a pressure at a downstream position of the outlet valve 3B1 in the outflow passage 2d. By contrast, the outlet valve 3B1 elastically deforms in the -z-direction as denoted by the dash-dotted line in Fig. 1 and leaves the outlet valve seat 3B2 to open the outflow passage 2d when the pressure in the pumping chamber 4c is higher than the pressure at the downstream position of the outlet valve 3B1.

Each of the flow passage part 2, the valve structure 3, and the pumping part 4 of the micropump 1 is defined by a plurality of stacked metal plates, adjacent meatal plates being jointed to each other. Specifically, as illustrated in Fig. 1, the flow passage part 2 is defined by the first plate 21 to the eighth plate 28, the valve structure 3 is defined by the ninth plate 31 to the eleventh plate 33, and the pumping part 4 is defined by the twelfth plate 41 and the thirteenth plate 42. The metal plates are heated in the stacked state in a preset positional relation, and adjacent metal plates are joined to each other through diffusion. A steel plate resulting from cold-rolling austenitic stainless steel, e.g., SUS316, is adoptable for each of the metal plates, and the resultant metal plates are heated to reach an austenitizing temperature or higher to be joined together.

Concerning the flow passage part 2, the first plate 21 has the inlet 2a and the outlet 2b, and the inflow passage 2c and the outflow passage 2d are formed in the second plate 22 to the eighth plate 28 . A portion of the fourth plate 24 between the inflow passage 2c and the outflow passage 2d constitutes the flow passage part diaphragm 2e, and a surface of the sixth plate 26 facing the fourth plate 24 is provided with the flow passage part valve seat 2f.

Concerning the valve structure 3, the ninth plate 31 defines the inflow passage 2c and the outflow passage 2d and includes the inlet valve seat 3A2. The tenth plate 32 includes the inlet valve 3A1 and the outlet valve 3B1. The eleventh plate 33 defines the inflow passage 2c and the outflow passage 2d and includes the outlet valve seat 3B2.

Concerning the pumping part 4, the twelfth plate 41 includes the side wall 4b and defines the pumping chamber 4c in cooperation with the thirteenth plate 42.

The operations of the micropump 1 will be described in detail with reference to Fig. 1.

The piezoelectric element 5 is activated when the piezoelectric element 5 receives a supply of alternate electric power while the micropump 1 is stopped or suspended, and the pumping part diaphragm 4a vibrates in the +z-direction and the -z-direction in response to the activation.

When the pumping part diaphragm 4a shifts in the +z-direction as denoted by the dashed line, that is, shifts in a direction in which the pumping chamber 4c increases in its size, the pressure at the upstream position of the inlet valve 3A1 is getting higher than the pressure in the pumping chamber 4c. Hence, the inlet valve 3A1 opens the inflow passage 2c as denoted by the dashed line. At this time, the pressure in the pumping chamber 4c is equal to or lower than the pressure at the downstream position of the outlet valve 3B1. Thus, the outlet valve 3B1 closes the outflow passage 2d. In this manner, the fluid is introduced into the pumping chamber 4c from the outside of the micropump 1 through the inlet 2a and the inflow passage 2c.

Thereafter, when the pumping part diaphragm 4a shifts in the -z-direction as denoted by the dash-dotted line, that is, shifts in a direction in which the pumping chamber 4c reduces in its size, the pressure at the upstream position of the inlet valve 3A1 is equal to or lower than the pressure in the pumping chamber 4c. Hence, the inlet valve 3A1 closes the inflow passage 2c. At this time, the pressure in the pumping chamber 4c is higher than the pressure at the downstream position of the outlet valve 3B1. Thus, the outlet valve 3B1 opens the outflow passage 2d as denoted by the dash-dotted line. In this manner, the fluid is discharged from the pumping chamber 4c to the outside of the micropump 1 through the outflow passage 2d and the outlet 2b. Repetition of the operations allows the fluid to flow in the one direction in the micropump 1. In addition, controlling a time period for the electric power supply to the piezoelectric element 5 or a frequency of the alternate electric power to be supplied to the piezoelectric element 5 leads to achievement in regulating the flow rate of the fluid.

The flow passage part diaphragm 2e elastically deforms in the +z-direction as denoted by the dashed line to come into contact with the flow passage part valve seat 2f when the pressure of the fluid flowing in the inflow passage 2c is higher than the pressure of the fluid flowing in the outflow passage 2d by the predetermined value or larger. This results in regulating the flow of the fluid through the outflow passage 2d.

Next, the valve structure 3 in the embodiment will be described in detail.

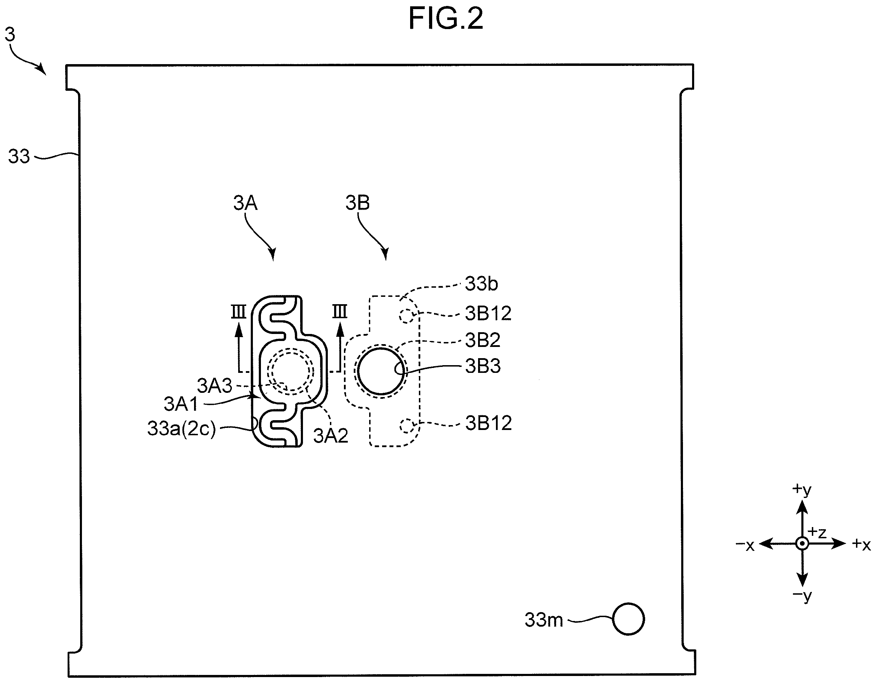

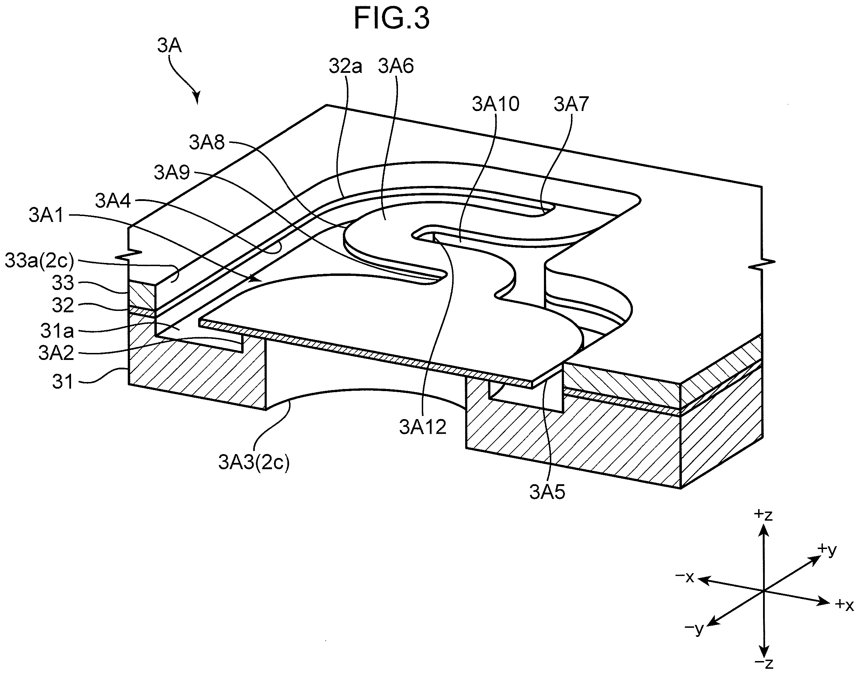

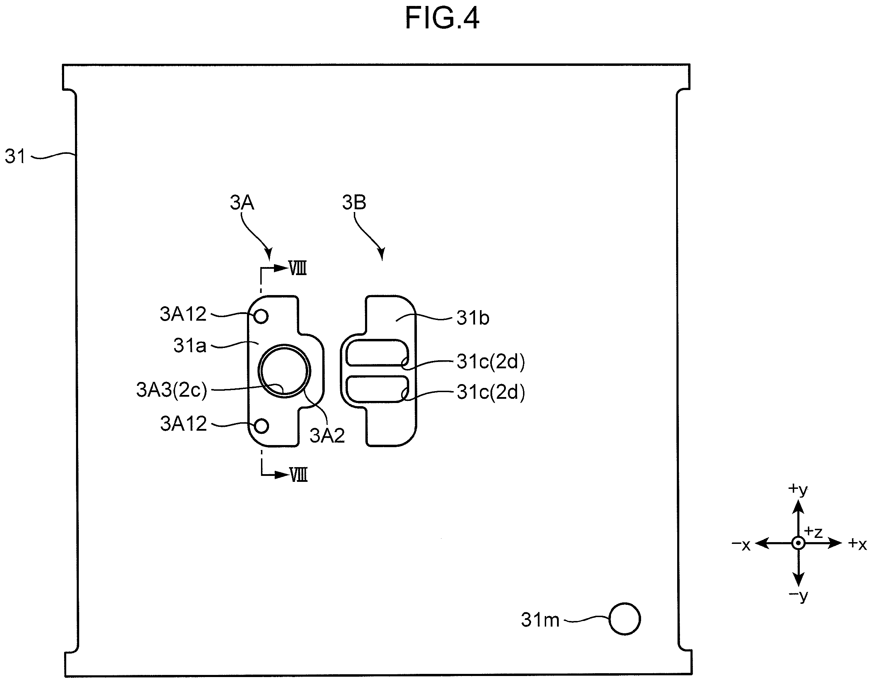

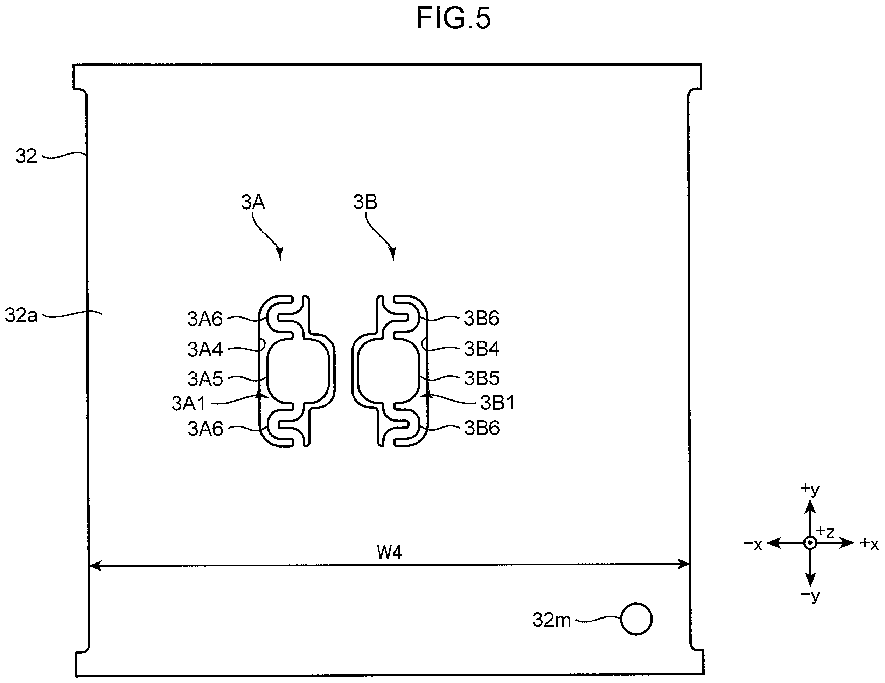

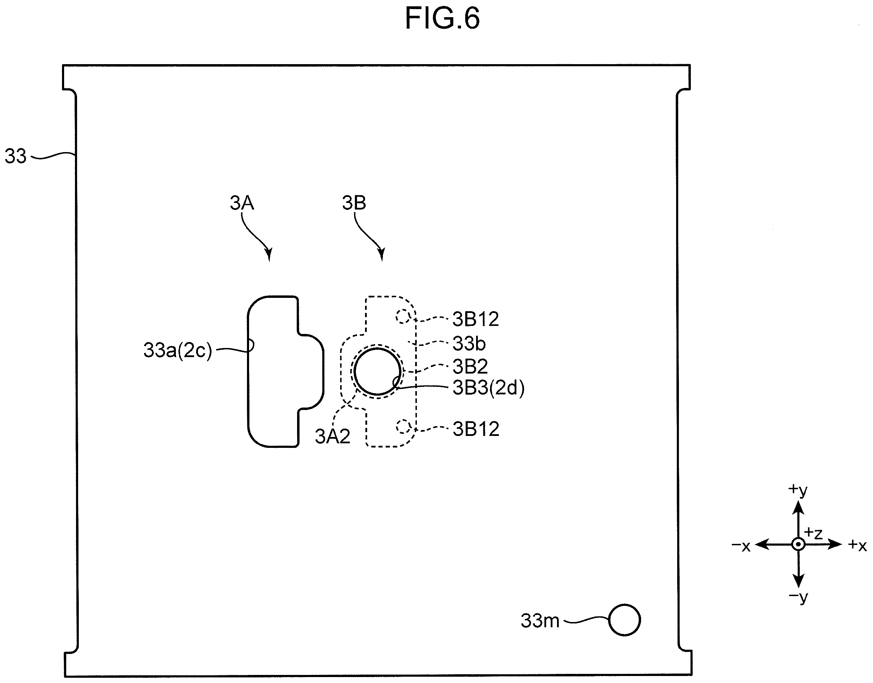

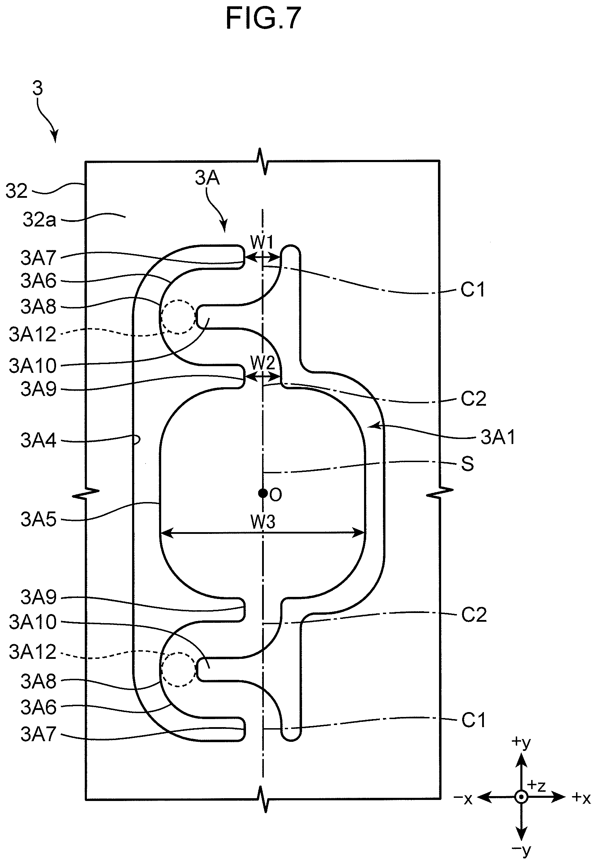

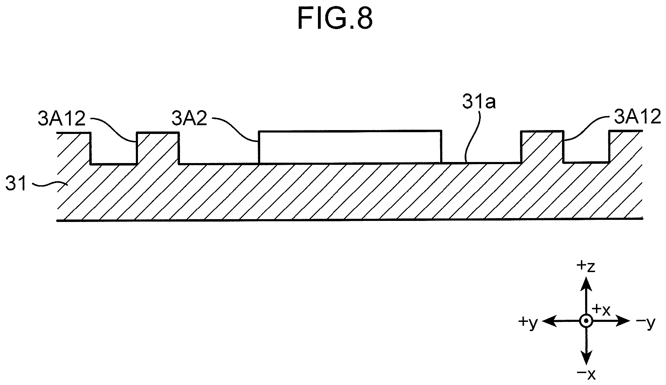

Fig. 2 is a plan view of the valve structure 3 seen from a position in the +z-direction to a position in the -z-direction. Fig. 3 is a perspective view taken along the line III-III in Fig. 2. Fig. 4 is a plan view of the ninth plate 31 seen from a position in the +z-direction to a position in the -z-direction. Fig. 5 is a plan view of the tenth plate 32 seen from a position in the +z-direction to a position in the -z-direction. Fig. 6 is a plan view of the eleventh plate 33 seen from a position in the +z-direction to a position in the -z-direction. Fig. 7 is an enlarged plan view of the inlet valve 3A1 at the tenth plate 10. Fig. 8 is a cross-sectional view taken along the line VIII-VIII in Fig. 4.

As described above, the valve structure 3 includes the inlet valve structure 3A and the outlet valve structure 3B. The inlet valve structure 3A has the inlet valve 3A1 and the inlet valve seat 3A2, and the outlet valve structure 3B has the outlet valve 3B1 and the outlet valve seat 3B2.

As illustrated in Fig. 2 to Fig. 5, the inlet valve structure 3A is defined by the ninth plate 31 (first metal plate) having an inlet through hole 3A3 (through hole); and the tenth plate 32 (second metal plate) joined to the ninth plate 31. The tenth plate 32 includes a base 32a having an inlet passing hole 3A4 (passing hole) in a region overlapping the inlet through hole 3A3, and the inlet valve 3A1 located in the inlet passing hole 3A4. The inlet through hole 3A3 serves as a part of the inflow passage 2c.

As illustrated in Figs. 3 and 5, the inlet valve 3A1 has a valve body 3A5 configured to close the inlet through hole 3A3 by coming into contact with an edge portion defining the inlet through hole 3A3, and a pair of valve supports 3A6 that support the valve body 3A5 to the base 32a in such a manner that the valve body 3A5 faces the edge portion (inlet valve seat 3A2) defining the inlet through hole 3A3 in the inlet passing hole 3A4.

As illustrated in Fig. 7, each of the valve supports 3A6 has a base-side end 3A7 extending from the edge portion defining the inlet passing hole 3A4 in the base 32a toward the valve body 3A5, an intermediate part 3A8 at a leading portion of the base-side end 3A7, and a valve body-side end 3A9 extending from the intermediate part 3A8 to the valve body 3A5.

In the embodiment, a line passing through the center O of the valve body 3A5 from a perpendicular viewpoint (hereinafter, referred to as a "z-directional viewpoint") of the tenth plate 32 viewed in plate perpendicularly intersecting directions (third directions z) that perpendicularly intersect a surface of the tenth plate 32, and extending in the second directions y along the surface of the tenth plate 32 is defined as a reference center line S. The base-side end 3A7 and the valve body-side end 3A9 respectively have center lines C1 and C2 with respect to width directions, the center lines agreeing with the reference center line S.

Each of the base-side end 3A7 and the valve body-side end 3A9 has a width which is smaller than a width of each of the valve body 3A5 and the base 32a. Specifically, a width W1 of the base-side end 3A7 and a width W2 of the valve body-side end 3A9 are smaller than a width W3 of the valve body 3A5 and a width W4 (see Fig. 5) of the base 32a. Width directions for the widths W1 to W4 are directions (first directions x) perpendicularly intersecting the reference center line S from the z-directional viewpoint.

The intermediate part 3A8 extends farther away from the reference center line S in extension directions (first directions x) perpendicularly intersecting the reference center line S than the base-side end 3A7 and the valve body-side end 3A9 from the z-directional viewpoint. The intermediate part 3A8 is provided with a through section 3A10 penetrating through the intermediate part 3A8 in plate thickness directions and intersecting the reference center line S. In the embodiment, the intermediate part 3A8 extends in one direction (-x-direction) of the extension directions, and the through section 3A10 opens in the other direction (+x-direction) of the extension directions.

As illustrated in Figs. 3, 4, and 7, the ninth plate 31 has a regulator 3A12 that faces the intermediate part 3A8 in the third directions z and regulates shift of the intermediate part 3A8 toward the ninth plate 31 (in the -z-direction).

The ninth plate 31 has a recess 31a facing the inlet passing hole 3A4 in the third directions z and opening toward the tenth plate 32. The regulator 3A12 protrudes from a bottom surface of the recess 31a toward the tenth plate 32. The aforementioned inlet valve seat 3A2 also protrudes from the bottom surface of the recess 31a toward the tenth plate 32. As illustrated in Fig. 8, the regulator 3A12 and the inlet valve seat 3A2 have the same protrusion height. Each of the regulator 3A12 and the inlet valve seat 3A2 having this configuration can be made by, for example, etching a metal plate.

As illustrated in Figs. 3 and 6, the eleventh plate 33 has an opening 33a facing the inlet passing hole 3A4 in the third directions z. The opening 33a defines a space to allow the inlet valve 3A1 to be elastically deformed in the +z-direction. The opening 33a serves as a part of the inflow passage 2c.

The outlet valve structure 3B has a configuration resulting from inverting the inlet valve structure 3A in the third directions z. Specifically, the eleventh plate 33 for the outlet valve structure 3B serves as the ninth plate 31 for the inlet valve structure 3A. Hereinafter, differences seen in the outlet valve structure 3B from the inlet valve structure 3A will be mainly described.

As illustrated in Figs. 2 and 4 to 6, the outlet valve structure 3B is defined by the eleventh plate 33 (first metal plate) and the tenth plate 32 (second metal plate) joined to the eleventh plate 33. In other words, the outlet valve structure 3B shares the tenth plate 32 with the inlet valve structure 3A. The eleventh plate 33 has, in addition to the opening 33a, an outlet through hole 3B3 (through hole) for the outlet valve structure 3B. The outlet through hole 3B3 serves as a part of the outflow passage 2d.

As illustrated in Fig. 5, the base 32a of the tenth plate 32 (second metal plate) has an outlet passing hole 3B4 (passing hole) in a region overlapping the outlet through hole 3B3 in addition to the inlet passing hole 3A4 for the inlet valve structure 3A. The tenth plate 32 includes the outlet valve 3B1 located in the outlet passing hole 3B4 in addition to the base 32a and the inlet valve 3A1.

The outlet valve 3B1 has a valve body 3B5 configured to close the outlet through hole 3B3 by coming into contact with an edge portion defining the outlet through hole 3B3, and a pair of valve supports 3B6 that support the valve body 3B5 to the base 32a in such a manner that the valve body 3B5 faces the edge portion (outlet valve seat 3B2) defining the outlet through hole 3B3 in the outlet passing hole 3B4.

Each of the valve supports 3B6 of the outlet valve 3B1 has a base-side end, an intermediate part, and a valve-body-side end. As illustrated in Fig. 5, the valve support 3B6 has the same configuration as the valve support 3A6 of the inlet valve structure 3A except for its symmetrical shape with the shape of the inlet valve structure 3A in the first directions x. Therefore, description for each part of the valve support 3B6 will be omitted.

As illustrated in Fig. 6, the eleventh plate 33 has, in addition to the opening 33a, a regulator 3B12 that faces the intermediate part 3B8 in the third-directions z and regulates shift of the intermediate part 3B8 toward the eleventh plate 33 (in the +z-direction).

The eleventh plate 33 has a recess 33b opening toward the tenth plate 32. The regulator 3B12 protrudes from a bottom surface of the recess 33b toward the tenth plate 32. The aforementioned outlet valve seat 3B2 also protrudes from the bottom surface of the recess 33b toward the tenth plate 32. The regulator 3B12 and the outlet valve seat 3B2 have the same protrusion height. Each of the regulator 3B12 and the outlet valve seat 3B2 can be made by, for example, etching a metal plate.

As illustrated in Fig. 4, the ninth plate 31 has, in addition to the recess 31a, a recess 31b facing the outlet passing hole 3B4 in the third directions z and opening toward the tenth plate 32. The recess 31b is provided with two through holes 31c penetrating through in the third directions z. A region between the two through holes 31c faces the valve body 3B5 in the third directions z to regulate the shift of the valve body 3B5 in a manner to prevent the valve body 3B5 from excessively shifting in the -z-direction when the outlet valve 3B1 elastically deforms in the -z-direction.

In manufacturing the valve structure 3, the ninth plate 31, the tenth plate 32, and the eleventh plate 33 are joined together through diffusion at positions determined in a preset positional relation. In the state where the positions of the ninth plate 31, the tenth plate 32, and the eleventh plate 33 are determined in this positional relation, the valve body 3A5 faces the edge portion defining the inlet through hole 3A3, the intermediate part 3A8 faces the regulator 3A12, the valve body 3B5 faces the edge portion defining the outlet through hole 3B3, and the intermediate part 3B8 faces the regulator 3B12, in the third directions z. The ninth plate 31, the tenth plate 32, and the eleventh plate 33 respectively have through holes 31m, 32m, and 33m at their respective corners for the determination of the positions. A pin or other member is inserted in the through holes 31m, 32m, and 33m to align the through holes 31m, 32m, and 33m. This enables facilitated stacking of the ninth plate 31, the tenth plate 32, and the eleventh plate 33 in the preset positional relation.

The ninth plate 31, the tenth plate 32, and the eleventh plate 33 are heated in the stacked state, and the tenth plate 32, the ninth plate 31, and the eleventh plate 33 are joined together.

### Operational effects

For the valve structure 3 in the first embodiment, a first example valve component includes the ninth plate 31 and the tenth plate 32, and a second example valve component includes the tenth plate 32 and the eleventh plate 33. The inlet valve structure 3A is defined by the first example valve component. The outlet valve structure 3B is defined by the second example valve component. The first and second example valve components provide operational effects to be described below.

In preparation for the micropump 1, the ninth plate 31, the tenth plate 32, and the eleventh plate 33 are heated and joined together in a stacked state. At this time, each associated metal plate thermally expands and crystal grains constituting the metal plate grow.

At the heating, the base 32a restricts the pair of valve supports 3A6 and the valve body 3A5 in directions along the reference center line S in the inlet valve structure 3A, and the base 32a restricts the pair of valve supports 3B6 and the valve body 3B5 in directions along the reference center line S in the outlet valve structure 3B. Thus, each of the valve supports 3A6, 3B6 and the valve body 3A5, 3B5 receives a compressive force from the base 32a in the directions along the reference center line S due to the thermal expansion in each of the inlet valve structure 3A and the outlet valve structure 3B.

Here, the intermediate part 3A8 of each valve support 3A6 deforms in a direction to reduce a gap defined by the through section 3A10 with the compressive force, and can absorb the compressive force received by each of the base-side end 3A7 and the valve body-side end 3A9 of the valve support 3A6 and the valve body 3A5. This configuration prevents the compressive force from acting to bend and deform each of the valve support 3A6 and the valve body 3A5 in the thickness directions thereof. Similarly, the outlet valve structure 3B prevents the compressive force from acting to bend and deform each of the valve support 3B6 and the valve body 3B5 in the thickness directions thereof.

At the heating, the surface of each of the valve supports 3A6 and the valve body 3A5 that faces the ninth plate 31 has a temperature which is higher than a temperature of an opposite surface to the surface facing the ninth plate 31. Further, the surface of each of the valve supports 3B6 and the valve body 3B5 that faces the eleventh plate 33 has a temperature which is higher than a temperature of an opposite surface to the surface facing the eleventh plate 33. The reasons will be described below.

The valve body 3A5 is in contact with or is located closer to the ninth plate 31 to close the inlet through hole 3A3 under a condition of receiving no external force. By contrast, a space which is larger than a space toward the ninth plate 31 is reliably kept in a direction in which the valve body 3A5 shifts away from the ninth plate 31 so as to allow the valve body 3A5 to move in the releasing direction thereof. The heat is propagated from the ninth plate 31 to the valve body 3A5 owing to the heating. Consequently, the temperature of the surface of each of the valve supports 3A6 and the valve body 3A5 that faces the ninth plate 31 is higher than the temperature of the opposite surface to the surface facing the ninth plate 31. Similarly, the temperature of the surface of each of the valve supports 3B6 and the valve body 3B5 that faces the eleventh plate 33 is higher than the temperature of the opposite surface to the surface facing the eleventh plate 33.

In the inlet valve structure 3A, the intermediate part 3A8 located between the base-side end 3A7 and the valve body-side end 3A9 extends farther away from the reference center line S in the extension directions (first directions x) perpendicularly intersecting the reference center line S than the base-side end 3A7 and the valve body-side end 3A9 from the perpendicular viewpoint without restriction in the extension directions perpendicularly intersecting the reference center line. Hence, at the heating, the intermediate part 3A8 deforms to be farther away from the ninth plate 31 at a longer distance from the reference center line S in the extension directions depending on the difference between amounts of thermal expansion at the surfaces of the intermediate part.

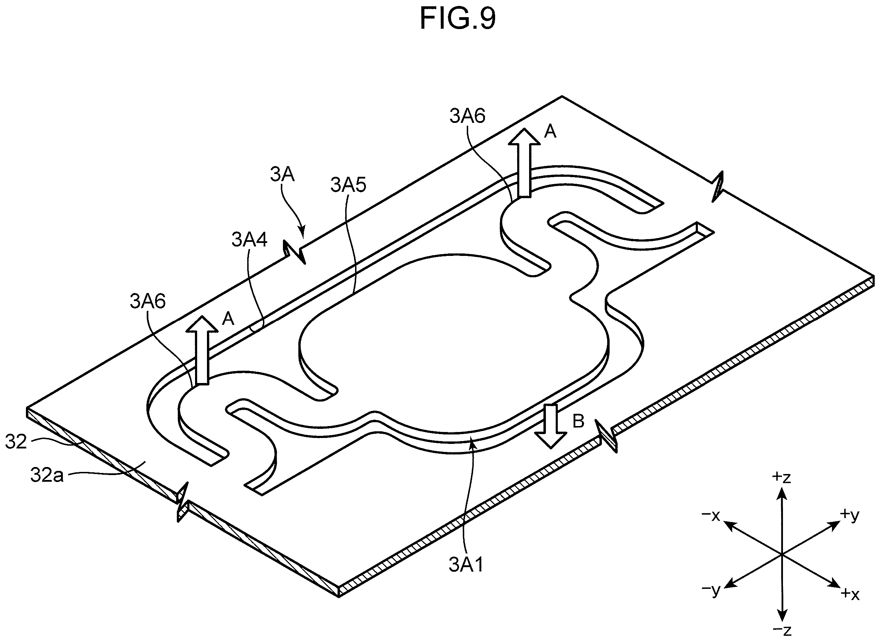

Specifically, the intermediate part 3A8 deforms to be away from the ninth plate 31, as denoted by the arrow A in Fig. 9, in a direction in which a target position on the intermediate part shifts from a connection of the intermediate part 3A8 with the base-side end 3A7 to a leading portion thereof in the extension directions. By contrast, the intermediate part 3A8 deforms to be closer to the ninth plate 31 in a direction in which a target position on the intermediate part 3A8 shifts from the leading portion thereof to the valve body-side end 3A9 in the extension directions. Such deformation in the portion from a connection of the intermediate part 3A8 with the valve body-side end 3A9 toward the ninth plate 31 leads to achievement in providing the valve body 3A5 with a force to keep the inlet through hole 3A3 closed. Fig. 9 is an enlarged perspective view of the inlet valve 31A at the tenth plate 32. It is noted here that a deformation amount of the intermediate part 3A8 is small enough to be invisible to the naked eye. Deformation of the intermediate part 3B8 at the heating leads to achievement in providing the valve body 3B5 with a force to keep the outlet through hole 3B3 closed in the outlet valve structure 3B in the same manner as the deformation in the inlet valve structure 3A.

In a case where the deformation of the tenth plate 32 is attributed to only thermal expansion, the tenth plate 32 is restored to its original shape through thermal shrinkage after cooling. By contrast, the tenth plate 32 is confirmed to be kept deformed when the crystal grains of the tenth plate 32 grow at the heating. This is because the grown crystal grains remain in this state even after the cooling.

From these perspectives, concerning the tenth plate 32 having the above-described shape, the shape of the tenth plate 32 (the valve body 3A5 and the valve supports 3A6) is kept such that the intermediate part 3A8 shifts away from the ninth plate 31 in the inlet valve structure 3A even after the cooling.

Accordingly, the first example valve component provides the valve body 3A5 with a holding force (arrow B in Fig. 9) from each of the valve supports 3A6 to keep the inlet through hole 3A3 closed owing to the shift of the intermediate part 3A8 in the inlet valve structure 3A. This configuration prevents a gap from coming into existence between the inlet through hole 3A3 and the valve body 3A5 with the holding force.

Similarly, the second example valve component keeps the shape of the tenth plate 32 (valve support 3B6) such that the intermediate part 3B8 shifts away from the eleventh plate 33 even after cooling in the outlet valve structure 3B, and provides the valve body 3B5 with a holding force from the valve support 3B6 to keep the outlet through hole 3B3 closed. This configuration prevents a gap from coming into existence between the outlet through hole 3B3 and the valve body 3B5.

For the inlet valve structure 3A in the first embodiment, the ninth plate 31 has the regulator 3A12. In the inlet valve structure 3A, each valve support 3A6 may resonate with the valve body 3A5 when the inlet through hole 3A3 is opened and closed in a short cycle to increase the flow rate of the fluid. In such a case, excessive shift of the intermediate part 3A8 of the valve support 3A6 toward the ninth plate 31 due to the momentum of the resonation may raise the valve body 3A5. This may cause the valve body 3A5 to open the through hole 3A3 contrary to the need to close the inlet through hole 3A3.

In this regard, the regulator 3A12 at the ninth plate 31 regulates the shift of the intermediate part 3A8 toward the ninth plate 31 in the inlet valve structure 3A, and thus can prevent the valve body 3A5 from opening the inlet through hole 3A3 contrary to the need to close the inlet through hole 3A3. Similarly, the regulator 3B12 at the eleventh plate 33 can prevent the valve body 3B5 from opening the outlet through hole 3B3 contrary to the need to close the outlet through hole 3B3 in the outlet valve structure 3B.

### Second embodiment

In the inlet valve 3A1 in the first embodiment, both the two valve supports 3A6 in the pair extend in the same direction (-x-direction) of the extension directions relative to the reference center line S. By contrast, in an inlet valve 3A1 in the second embodiment, two valve supports 3A6 in a pair extend in different directions from each other. Hereinafter, differences seen in the second embodiment of the present invention from the first embodiment will be mainly described.

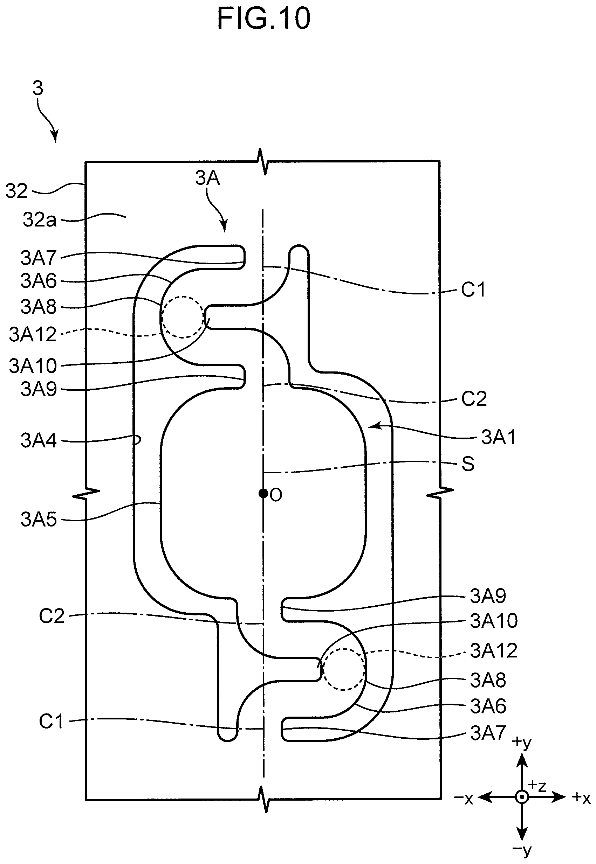

Fig. 10 is an enlarged plan view of the inlet valve 3A1 at a tenth plate 32 in the second embodiment. In the descriptions below, constituent elements which are substantially the same as those in Fig. 1 to Fig. 9 are given the same reference numerals and signs, and thus, description therefor will be omitted.

As illustrated in Fig. 10, in the second embodiment, the valve support 3A6 in the +y-direction has an intermediate part 3A8 extending in the -x-direction of extension directions, and the valve support 3A6 in the -y-direction has an intermediate part 3A8 extending in the +x-direction.

Each of the valve supports 3A6 shifts away from a ninth plate 31. The valve support 3A6 in the +y-direction can exert a holding force to a portion of a valve body 3A5 in the +x-direction from the reference center line S to keep the inlet through hole 3A3 closed. The valve support 3A6 in the -y-direction can exert a holding force to a portion of the valve body 3A5 in the -x-direction from the reference center line S to keep the inlet through hole 3A3 closed.

The first embodiment is considered to be more advantageous than the second embodiment from the perspective of facilitated control of flow of a fluid in a specific flow direction.

Specifically, in the second embodiment, the valve support 3A6 in the +y-direction and the valve support 3A6 in the -y-direction extend in the different directions from each other. In this arrangement, when the valve body 3A5 opens the inlet through hole 3A3, the valve body 3A5 opens the through hole without tilting. The valve body 3A5 hence has an opening degree at an end thereof in the -x-direction so as to be equivalent to an opening degree at the other end thereof in the +x-direction. This consequently allows the fluid having flowed through the inlet through hole 3A3 and reached the valve body 3A5 to equally flow in the -x-direction and the +x-direction.

In other words, in the first embodiment, both the valve supports 3A6 in the pair extend in the same direction (-x-direction) of the extension directions relative to the reference center line S. Hence, one of the valve supports 3A6 is in the same arrangement as the arrangement of the other of the valve supports 3A6 relative to the reference center line S. In this arrangement, when the valve body 3A5 opens the inlet through hole 3A3, the valve body 3A5 rotates about the leading portion of the intermediate part 3A8 of each of the valve supports 3A6 in the associated extension direction (-x-direction). The rotation allows a portion of the valve body 3A5 in the +x-direction to open more greatly than a portion thereof in the -x-direction relative to the reference center line S. This consequently achieves control of flow of the fluid in the +x-direction.

### Third Embodiment

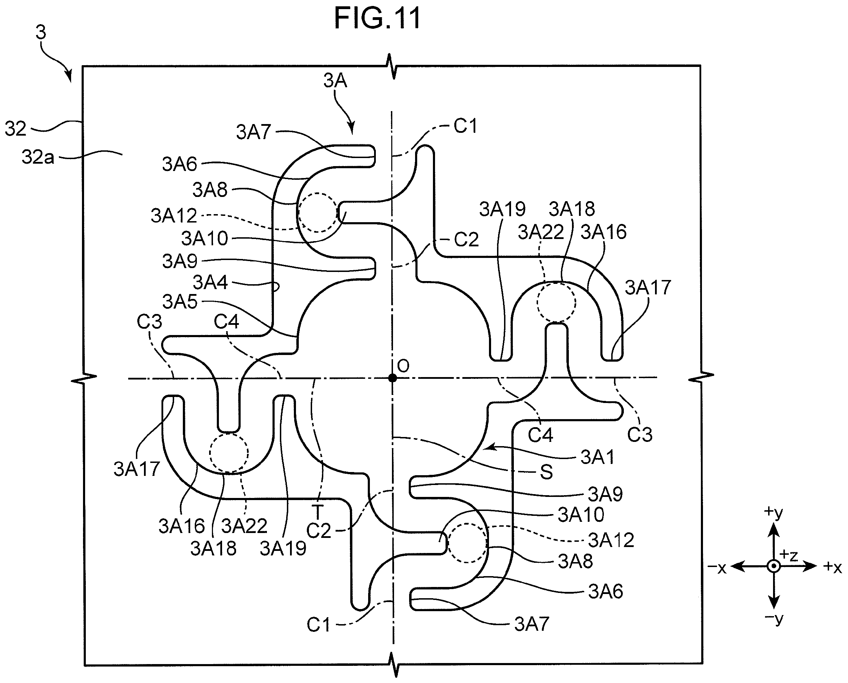

Fig. 11 is an enlarged plan view of an inlet valve 3A1 at a tenth plate 32 for a valve structure in a third embodiment. As illustrated in Fig. 11, the inlet valve 3A1 in an inlet valve structure 3A in the embodiment has a pair of valve supports 3A6 and a pair of another valve supports 3A16 (another valve supports) that is different from the pair of valve supports 3A6.

The pair of valve supports 3A6 has the same configuration as the configuration of the pair of valve supports 3A6 in the second embodiment. The pair of another valve supports 3A16 has a configuration resulting from rotating the pair of valve supports 3A6 in the second embodiment at 90° about the center O of a valve body 3A5 from the z-directional viewpoint.

Each of the valve supports 3A16 has a base-side end 3A17 (another base-side end), an intermediate part 3A18 (another intermediate part), and a valve body-side end 3A19 (another valve body-side end).

In the embodiment, a line passing through the center O of the valve body 3A5 from the z-direction viewpoint and extending in the first directions x along a surface of the tenth plate 32 is defined as another reference center line T (another reference center line) that is different from the reference center line S. The base-side end 3A17 and the valve body-side end 3A19 respectively have center lines C3 and C4 with respect to width directions, the center lines agreeing with the reference center line T. The reference center line S and the reference center line T make a plurality of equal intersection angles (right angles) each defined between adjacent two line segments of the reference center lines.

The intermediate part 3A18 extends farther away from the reference center line T in extension directions thereof perpendicularly intersecting the reference center line T than the base-side end 3A17 and the valve body-side end 3A19 from the z-directional viewpoint. In the embodiment, the intermediate part 3A18 of the valve support 3A16 in the +x-direction extends in the +y-direction, and the intermediate part 3A18 of the valve support 3A16 in the -x-direction extends in the -y-direction.

In the embodiment, as illustrated in Fig. 11, a ninth plate 31 has a regulator 3A12 that faces the intermediate part 3A8 in the third directions z and regulates shift of the intermediate part 3A8 toward the ninth plate 31 (in the -z-direction) in the same manner as in the first embodiment. The ninth plate further has another regulator 3A22 (another regulator) that faces the intermediate part 3A18 and regulates shift of the intermediate part 3A18 in the -z-direction.

The inlet valve structure 3A in the embodiment includes another valve supports 3A16 and another regulator 3A22 in addition to the valve supports 3A6 and the regulator 3A12. Besides, the reference center line S and the another reference center line T make a plurality of equal intersection angles each defined between adjacent two line segments of the reference center lines.

This configuration achieves firmer hold of the valve body 3A5 at the position closer to the ninth plate 31 and more stable opening and closing operations of the valve body 3A5 than hold and corresponding operations in the configuration where only the pair of valve supports 3A6 support the valve body.

Similarly, the outlet valve structure 3B achieves firm hold of the valve body 3B5 at the position closer to the eleventh plate 33 and stable opening and closing operations of the valve body 3B5.

The third embodiment including the pair of another valve supports 3A16 that is different from the pair of valve supports 3A6 has been described. However, the third embodiment may include two or more pairs of valve supports that are different from the pair of valve supports 3A6. In this case, the reference center line S and reference center lines associated with the two or more pairs of valve supports may make a plurality of equal intersection angles each defined between adjacent two line segments of the reference center lines.

In the third embodiment, the valve supports 3A6 extend in different directions from each other relative to the reference center line S, and the valve supports 3A16 extend in different directions from each other relative to the reference center line T. Instead, both the valve supports 3A6 may extend in a specific same direction, and both the valve supports 3A16 may extend in a specific same direction.

### Fourth Embodiment

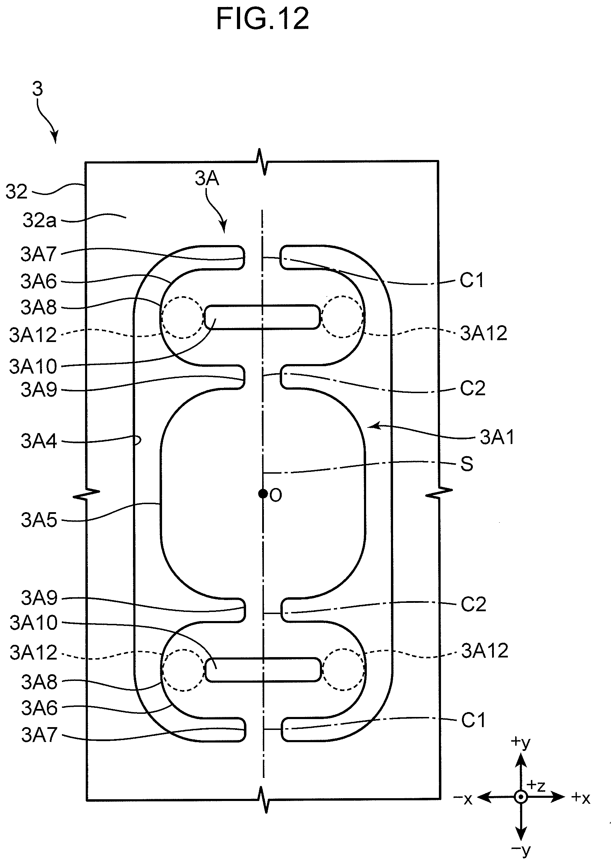

Fig. 12 is an enlarged plan view of an inlet valve at a tenth plate in a fourth embodiment. In the first embodiment, the intermediate part 3A8 extends in one direction of the extension directions. By contrast, in the fourth embodiment, as illustrated in Fig. 12, an intermediate part 3A8 extends in both the extension directions. The intermediate part 3A8 in Fig. 12 has an annular shape, and is provided with a through section 3A10 which is closed without opening in any of the extension directions.

A valve component in the fourth embodiment prevents a gap from coming into existence between an inlet through hole 3A3 and a valve body 3A5.

It is noted here that, in the valve structure 3 in the first embodiment, the outlet valve 3B1 in the outlet valve structure 3B may have the same shape as the shape of the inlet valve 3A1 in each of the second to the fourth embodiments, each of the inlet valve 3A1 and the outlet valve 3B1 may have the shape of the corresponding valve in any of the first to fourth embodiments, and the inlet valve structure 3A and the outlet valve structure 3B may have different shapes from each other.

The embodiments described above mainly cover the invention including the following features of relevant configurations.

To solve the disadvantages described above, a valve component according to a first feature of the invention is a valve component for a valve structure. The valve component includes: a first metal plate having a through hole; and a second metal plate including: a base having a passing hole in a region overlapping the through hole; a valve body configured to close the through hole by coming into contact with an edge portion defining the through hole; and a pair of valve supports that support the valve body to the base in such a manner that the valve body is located in the passing hole. The second metal plate is to be joined to the first metal plate in a positional relation preset in such a manner that the valve body faces the edge portion defining the through hole. Each of the valve supports has a base-side end extending from an edge portion defining the passing hole in the base toward the valve body, an intermediate part at a leading portion of the base-side end, and a valve body-side end extending from the intermediate part to the valve body. Each of the base-side end and the valve body-side end has a center line with respect to width directions and a width which is smaller than a width of each of the valve body and the base, the center line agreeing with a reference center line passing through the center of the valve body from a perpendicular viewpoint of the second metal plate viewed in plate perpendicularly intersecting directions that perpendicularly intersect a surface of the second metal plate, the reference center line extending along the surface of the second metal plate. The intermediate part extends farther away from the reference center line in extension directions perpendicularly intersecting the reference center line than the base-side end and the valve body-side end from the perpendicular viewpoint. The intermediate part is provided with a through section intersecting the reference center line from the perpendicular viewpoint and penetrating through the intermediate part in plate thickness directions.

In preparation for a micropump having the valve structure defined by the valve component according to the first feature of the present invention, the first metal plate and the second metal plate are heated and joined together in a stacked state. At this time, each metal plate thermally expands and crystal grains constituting the metal plate grow.

In the first feature, at the heating, the base restricts the pair of valve supports and the valve body in directions along the reference center line. Thus, each of the valve supports and the valve body receives a compressive force from the base in the directions along the reference center line due to thermal expansion. Here, the intermediate part of each valve support deforms in a direction to reduce a gap defined by the through section with the compressive force, and can absorb the compressive force received by each of the opposite ends of each valve support and the valve body. This configuration prevents the compressive force from acting to bend and deform each of the valve support and the valve body in the thickness directions thereof.

At the heating, a surface of the valve structure that faces the first metal plate has a temperature which is higher than a temperature of an opposite surface to the surface facing the first metal plate. The reasons will be described below.

The valve body is in contact with or is located closer to the first metal plate to close the through hole under a condition of receiving no external force. By contrast, a space which is larger than a space toward the first metal plate is reliably kept in a direction in which the valve body shifts away from the first metal plate so as to release the valve body in the direction. The heat is propagated from the first metal plate to the valve body owing to the heating. Consequently, the temperature of the surface of each of the valve supports and the valve body that faces the first metal plate is higher than the temperature of the opposite surface to the surface facing the first metal plate.

In the first feature, the intermediate part located between the base-side end and the valve body-side end extends farther away from the reference center line in the extension directions perpendicularly intersecting the reference center line than the base-side end and the valve body-side end from the perpendicular viewpoint (z-directional viewpoint) without restriction in the extension directions perpendicularly intersecting the reference center line. Hence, at the heating, the intermediate part deforms to be farther away from the first metal plate at a longer distance from the reference center line in the extension directions depending on the difference between amounts of thermal expansion at the surfaces of the intermediate part.

Specifically, the intermediate part deforms to be away from the first metal plate in a portion from a connection of the intermediate part with the base-side end to a leading portion thereof in the extension directions. By contrast, the intermediate part deforms to be closer to the first metal plate in another portion of the intermediate part from the leading portion thereof to the valve body-side end in the extension directions. Such deformation in the portion from a connection of the intermediate part with the valve body-side end toward the first metal plate leads to achievement in providing the valve body with a force to keep the through hole closed.

In a case where the deformation of the second metal plate is attributed to only thermal expansion, the second metal plate is restored to its original shape through thermal shrinkage after cooling. By contrast, the second metal plate is confirmed to be kept deformed when the crystal grains of the second metal plate grow at the heating. This is because the grown crystal grains remain in this state even after the cooling. From these perspectives, concerning the second metal having the above-described shape, the shape of the second metal plate (the valve body and the valve supports) is kept such that the intermediate part shifts away from the first metal plate in the valve structure even after the cooling.

Accordingly, the first feature makes it possible to provide the valve body with a holding force from each of the valve supports to keep the through hole closed owing to the deformation of the intermediate part. This configuration prevents a gap from coming into existence between the through hole and the valve body with the holding force.

In the valve component according to a second feature, in the first feature, the intermediate part preferably extends in one direction of the extension directions relative to the reference center line, and the through section preferably opens in other direction of the extension directions.

In the second feature, the valve support deforms in such a manner that the intermediate part having thermally expanded through the heating deforms in a direction to reduce a gap defined by the through section with a compressive force generated in directions along the reference center line. At this time, a portion of the intermediate part that is adjacent to the through section shifts away from the first metal plate. As a result, this configuration enables exertion of a holding force to a portion of the valve body that is located opposite the intermediate part across the reference center line to keep the through hole closed.

In the valve component according to a third feature, in the second feature, the intermediate part of each valve support constituting the pair of valve supports may extend in the same direction of the extension directions relative to the reference center line.

In the third feature, one of the valve supports is in the same arrangement as the arrangement of the other of the valve supports relative to the reference center line. In this arrangement, when the valve body opens the through hole, the valve body rotates about the leading portion of the intermediate part of each valve support in the associated extension direction. The rotation allows the portion of the valve body located opposite the intermediate part across the reference center line to open more greatly than a portion thereof located closer to the intermediate part. This configuration allows the fluid to easily flow in a direction opposite the intermediate part to the valve body. In other words, the configuration allows the fluid to easily flow in a desired direction.

In the valve component according to a fourth feature, in any one of the first to third features, the first metal plate preferably has a regulator that faces the intermediate part in the plate perpendicularly intersecting directions and regulates shift of the intermediate part toward the first metal plate in a state where the first metal plate is in the positional relation with the second metal plate.

In the micropump, each valve support may resonate with the valve body when the through hole is opened and closed in a short cycle to increase the flow rate of the fluid. In such a case, excessive shift of the intermediate part of the valve support toward the first metal plate due to the momentum of the resonation may raise the valve body. This may cause the valve body to open the through hole contrary to the need to close the through hole.

In the fourth feature, the regulator at the first metal plate regulates the shift of the intermediate part toward the first metal plate, and thus can prevent the valve body from opening the through hole contrary to the need to close the through hole.

In the valve component according to a fifth feature, in any one of the first to third features, the second metal plate preferably includes at least one pair of another valve supports that is different from the pair of valve supports. Each valve support in the at least one pair of another valve supports preferably has another base-side end extending from the edge portion defining the passing hole in the base toward another the valve body, another intermediate part at a leading portion of the another base-side end, and another valve body-side end extending from the another intermediate part to the valve body. Each of the another base-side end and the another valve body-side end preferably has a center line with respect to width directions and a width which is smaller than the width of each of the valve body and the base, the center line agreeing with another reference center line that is different from the reference center line, passes through the center of the valve body from the perpendicular viewpoint, and extends along the surface of the second metal plate. The another intermediate part preferably extends farther away from the another reference center line in another extension directions perpendicularly intersecting the another reference center line than the another base-side end and the another valve body-side end from the perpendicular viewpoint. Preferably, the reference center line and the another reference center line associated with the at least one pair of valve supports make a plurality of equal intersection angles each defined between adjacent two line segments of the reference center lines. The first metal plate preferably has another regulator that faces the another intermediate part in the plate perpendicularly intersecting directions and regulates shift of the another intermediate part toward the first metal plate in a state where the first metal plate is in the positional relation with the second metal plate.

The invention according to the fifth feature further includes another valve supports and another regulator in addition to the valve supports and the regulator. Besides, the reference center line and another reference center line make a plurality of equal intersection angles each defined between adjacent two line segments of the reference center lines.

This configuration achieves firmer hold of the valve body in a state of keeping the through hole closed and more stable opening and closing operations of the valve body than hold and corresponding operations in the configuration where only one pair of valve supports support the valve body.

## Claims

1. A valve component for a valve structure, comprising:
a first metal plate having a through hole; and
a second metal plate including:
a base having a passing hole in a region overlapping the through hole;
a valve body configured to close the through hole by coming into contact with an edge portion defining the through hole; and
a pair of valve supports that support the valve body to the base in such a manner that the valve body is located in the passing hole,
the second metal plate being to be joined to the first metal plate in a positional relation preset in such a manner that the valve body faces the edge portion defining the through hole, wherein
each of the valve supports has a base-side end extending from an edge portion defining the passing hole in the base toward the valve body, an intermediate part at a leading portion of the base-side end, and a valve body-side end extending from the intermediate part to the valve body,
each of the base-side end and the valve body-side end has a center line with respect to width directions and a width which is smaller than a width of each of the valve body and the base, the center line agreeing with a reference center line passing through the center of the valve body from a perpendicular viewpoint of the second metal plate viewed in plate perpendicularly intersecting directions that perpendicularly intersect a surface of the second metal plate, the reference center line extending along the surface of the second metal plate,
the intermediate part extends farther away from the reference center line in extension directions perpendicularly intersecting the reference center line than the base-side end and the valve body-side end from the perpendicular viewpoint, and
the intermediate part is provided with a through section intersecting the reference center line from the perpendicular viewpoint and penetrating through the intermediate part in plate thickness directions.

2. The valve component according to claim 1, wherein the intermediate part extends in one direction of the extension directions relative to the reference center line, and the through section opens in other direction of the extension directions.

3. The valve component according to claim 2, wherein the intermediate part of each valve support constituting the pair of valve supports extends in the same direction of the extension directions relative to the reference center line.

4. The valve component according to claim 1, wherein the first metal plate has a regulator that faces the intermediate part in the plate perpendicularly intersecting directions and regulates shift of the intermediate part toward the first metal plate in a state where the first metal plate is in the positional relation with the second metal plate.

5. The valve component according to any one of claims 1 to 4, wherein the second metal plate includes at least one pair of another valve supports that is different from the pair of valve supports,
each valve support in the at least one pair of another valve supports has another base-side end extending from the edge portion defining the passing hole in the base toward the valve body, another intermediate part at a leading portion of the another base-side end, and another valve body-side end extending from the another intermediate part to the valve body,
each of the another base-side end and the another valve body-side end has a center line with respect to width directions and a width which is smaller than the width of each of the valve body and the base, the center line agreeing with another reference center line that is different from the reference center line, passes through the center of the valve body from the perpendicular viewpoint, and extends along the surface of the second metal plate,
the another intermediate part extends farther away from the another reference center line in another extension directions perpendicularly intersecting the another reference center line than the another base-side end and the another valve body-side end from the perpendicular viewpoint,
the reference center line and the another reference center line associated with the at least one pair of valve supports make a plurality of equal intersection angles each defined between two adjacent line segments of the reference center lines, and
the first metal plate has another regulator that faces the another intermediate part in the plate perpendicularly intersecting directions and regulates shift of the another intermediate part toward the first metal plate in a state where the first metal plate is in the positional relation with the second metal plate.
